# FASCICULE DE BREVET EUROPEEN

(11) **EP 0 506 571 B1**
(45) Date de publication et mention de la délivrance du brevet: **02.08.1995**
(21) Numéro de dépôt: 92400852.7
(22) Date de dépôt: 27.03.1992
(51) Int. Cl.: F01M 13/04, B01D 36/00, B01D 46/24

(54) **Dispositif de filtration et de communication entre l'atmosphère et l'intérieur d'un carter**
Filtrations- und Verbindungsvorrichtung zwischen der Atmosphäre und dem Inneren einer Ölwanne
Filtration and communication device between the atmosphere and the interior of a carter

(30) Priorité: 29.03.1991 FR 9103905
(43) Date de publication de la demande: 30.09.1992
(73) Titulaire: Pall Corporation, East Hills, New York 11548 (US)
(72) Inventeur: Blanc, Pierre L., F-78740 Vaux-sur-Seine (FR); Travassac, Jean-Paul C., F-78100 Saint-Germain-en-Laye (FR)
(74) Mandataire: Hasenrader, Hubert

(56) Documents cités:
- EP-A- 0 395 841
- DE-A- 3 615 397
- DE-A- 3 735 913
- DE-A- 3 938 919

## Description

La présente invention concerne un dispositif de filtration et de communication entre l'atmosphère et l'intérieur d'un réservoir ou d'un carter. Dans le cas de l'utilisation avec un carter, ce dispositif est communément appelé parfois "reniflard".

D'une manière générale, les carters sont des enveloppes étanches qui protègent dans un volume fermé à la fois des organes mécaniques animés des mouvements (transmissions, boîte de vitesses, moteur, etc.) et un lubrifiant (huile...).

La température interne régnant dans l'enceinte du carter est relativement élevée en raison des dégagements de chaleur provoqués par les phénomènes de combustions, de conduction thermique, de frottements mécaniques, etc.

Il en résulte souvent la création de brouillards internes constitués de mélanges gazeux d'air et d'huile vaporisée qui ne doivent pas s'échapper dans l'atmosphère sous peine de polluer L'environnement et d'augmenter la consommation d'huile.

Conjointement, il est nécessaire de dépressuriser le carter par mise à l'atmosphère de l'enceinte pour éviter les problèmes liés à une éventuelle surpression interne provoquée par les échauffements précédents. Par ailleurs, si la pression baisse dans l'enceinte du fait d'un éventuel refroidissement ou d'un effet dynamique particulier, il se produit alors un appel d'air extérieur contenant des particules et une ventilation interne dont l'influence peut se révéler néfaste sur les mécanismes logés dans le carter (corrosion...).

Il a déjà été développé des dispositifs qui comprennent un boîtier pourvu d'évents de communication avec l'extérieur et contenant une cartouche de filtration.

Dans ces dispositifs, la communication du carter avec l'extérieur se fait à travers un passage vertical ménagé entre le carter et le boîtier, à travers la paroi poreuse de la cartouche de filtration et à travers les évents.

Dans ce cas, l'air traverse dans les deux sens et de la même façon la cartouche de filtration. Celle-ci est en général de type papier. L'arrêt des goutelettes des brouillards d'huile est quasiment inexistant car le phénomène de coalescence, qui consiste à regrouper des micro-gouttelettes en gouttes suffisamment importantes qui peuvent subir l'action de la pensateur pour ne pas être entraînées par le courant d'air, ne se fait que partiellement lors du passage au travers du média filtrant. Une grande partie de l'huile est ainsi évacuée à l'extérieur du carter en s'échappent de la cartouche sans être récupérée.

De plus, dans les dispositifs connus, les évents sont disposés en général dans la partie inférieure du boîtier pour permettre l'évacuation des gouttes éventuelles d'huile se formant dans le média filtrant vers l'extérieur.

Enfin, en cas de colmatage de la cartouche, une différence de pression importante peut s'établir entre l'extérieur et l'intérieur de l'enceinte du carter et provoquer des ruptures ou des défauts d'étanchéité.

Dans le cas d'un réservoir contenant un liquide surmonté d'une poche d'air, les changements de température, de pression ou de niveau du liquide nécessitent, dans de nombreux cas, que la partie supérieure du réservoir soit en communication avec l'extérieur. Avec certains liquides facilement vaporisables, il peut se produire des échappées de brouillards de liquide préjudiciables à l'environnemement. De plus, il est souvent nécessaire de filtrer l'air entrant dans le réservoir pour ne pas souiller le liquide. Le problème à résoudre avec ces réservoirs est semblable au problème de recyclage des brouillard d'huile d'un carter. Les réservoirs concernés peuvent être des réservoirs de stockage de liquide ou des réservoirs de fermentation. Par souci de clarté, il ne sera fait mention dans la suite du présent mémoire que des carters à huile.

La présente invention permet de résoudre ces inconvénients ou du moins de les atténuer.

DE-A - 3 938 919 et DE-A - 3 735 913 dévoilent un dispositif de filtration et de communication entre l'atmosphère et un réservoir à liquide notamment un carter à huile, du type comprenant d'une part, un boîtier présentant une cavité interne et une embase munie de moyens de fixation sur ledit carter, et, d'autre part, une cartouche de filtration disposée à l'intérieur dudit boîtier de manière à séparer ladite cavité interne en :
une première chambre qui communique avec ledit carter par un passage vertical ménagé dans ladite embase et ledit carter, et
une deuxième chambre qui entoure au moins partiellement ladite première chambre et qui communique avec l'extérieur par des évents ménagés dans ledit boîtier, et débouchant dans la partie supérieure de ladite deuxième chambre, ladite cartouche comportant un média filtrant disposé sensiblement à la verticale, ledit dispositif comprenant en outre un siphon interposé entre la partie inférieure de ladite deuxième chambre et ledit carter, et destiné à récupérer et recycler de l'huile à partir du média filtrant, et à mettre ledit carter en communication directe avec ladite deuxième chambre en cas de surpression dans ledit carter.

Selon la présente invention, il est prévu entre l'embase dudit boîtier et ladite cartouche de filtration, logeant dans la partie supérieure dudit boîtier, un support de cartouche présentant un perçage vertical formant la partie supérieure du conduit vertical. Ledit support de cartouche présente sur sa face inférieure une gorge annulaire ouverte vers le bas et une paroi latérale légèrement tronconique et s'amincissant vers le bas. L'embase du boîtier présente une nervure annulaire qui est dirigée vers l'intérieur du boîtier et qui s'emboîte, au moins partiellement, dans la gorge annulaire du support de cartouche. Il présente de plus, des surfaces en saillie destinées au centrage du support de cartouche. Le siphon est alors constitué par les espaces ménagés entre l'embase et le support de cartouche.

Avantageusement, les moyens de fixation de l'embase sur le carter comportent un manchon annulaire emmanché dans une ouverture du carter, ledit manchon formant la partie inférieure du conduit vertical.

Le dispositif de l'invention permet de réduire considérablement les quantités d'huile rejettée à l'atmosphère et donc la consommation d'huile grâce au principe du recyclage.

En outre, en cas d'encrassement du média filtrant ou de disfonctionnement de la cartouche, les moyens de dérivation jouent le rôle de soupape de sécurité et permettent d'éviter la détérioration du carter. Le dispositif de l'invention est simple, peu volumineux et ne comporte aucune pièce en mouvement.

Il est peu onéreux car constitué de pièces moulées ou fabriquées en fonderie et son montage sur le carter est très facile. Il permet une très bonne protection contre les infiltrations d'eau et peut être utilisé même lorsque le carter travaille en position inclinée. Par ailleurs, il assure une filtration extrêmement efficace à la fois des brouillards d'huile et de l'air atmosphérique chargé en particules tout en ayant une faible perte de charge.

De plus, la séparation des moyens de filtration et des moyens de recyclage de l'huile permet un fonctionnement régulier du dispositif.

La présente invention sera mieux comprise à la lecture de la description qui va suivre accompagnée des dessins annexés sur lesquels :
- les figures 1 et 2 représentent des vues en élévation et en coupe du dispositif de l'invention en fonctionnement dans un sens et dans l'autre,
- la figure 3 représente une vue en élévation et en coupe du dispositif des figures 1 et 2 en cas de colmatage de la cartouche de filtration,

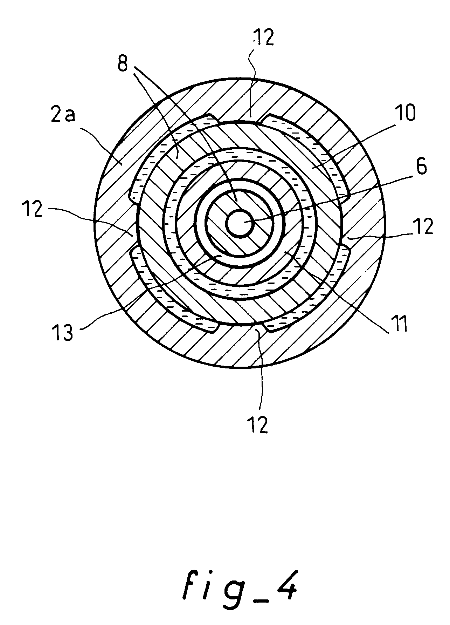

- la figure 4 est une coupe selon la ligne IV-IV de la figure 1.

Le dispositif représenté sur les dessins est monté à la partie supérieure d'un carter 1 contenant de l'huile et des organes mécaniques (non représentés) destinés à être animés de mouvements divers.

Ce dispositif comprend un boîtier 2, de forme cylindrique d'axe X, constitué de parois latérales 2a s'étendant à partir d'une embase, et d'un couvercle supérieur 2b éventuellement amovible. Le boîtier 2 est pourvu d'évents 3 permettant une circulation d'air entre l'atmosphère et sa cavité interne. Ces évents 3 sont constitués de préférence par des orifices 3a ménagés dans les bords latéraux du couvercle 2b et prolongés jusqu'à l'intérieur du boîtier par des chicanes 3b réalisées au moyen de canaux ménagés respectivement sur la face interne des bords latéraux du couvercle 2b et sur la face externe des bords supérieurs des parois latérales 2a. Ces évents 3 sont inclinés de manière à empêcher une éventuelle entrée d'eau, leurs orifices extérieurs 3c étant situés à un niveau inférieur à leurs orifices intérieurs 3d.

Le boîtier 2 renferme, dans sa partie supérieure, une cartouche de filtration 4 utilisant le principe de la séparation par coalescence. La cartouche 4 comprend un média filtrant 5 constitué par exemple d'une paroi annulaire poreuse et est fermée sur le dessus par une paroi supérieure 5′. La cartouche 4 peut être montée à l'intérieur du boîtier 2 de manière amovible afin de permettre son remplacement ou son nettoyage. Le média filtrant 5 est de préférence coaxial au boîtier 2.

La cartouche délimite ainsi un certain volume interne V communiquant, d'une part, avec l'extérieur par l'intermédiaire du média filtrant 5 et des évents 3, et, d'autre part, avec le carter 1 par un passage vertical 6 débouchant dans le volume V à la partie inférieure de la cartouche. Elle sépare la cavité interne du boîtier 2 en deux chambres séparées par le média filtrant 5, une première chambre 4a communiquant avec le carter 1 par le passage vertical 6 et une deuxième chambre 4b entourant au moins partiellement la première chambre 4a et communiquant avec l'extérieur par les évents 3. Comme on le voit clairement sur les dessins, les évents 3 débouchent dans la partie supérieure de la deuxième chambre 4b.

Le passage vertical 6 comprend un conduit vertical inférieur 6a ménagé au travers de la paroi supérieure du carter 1 et un conduit vertical supérieur 6b ménagé dans la partie inférieure du boîtier 2 et emboîté au moins partiellement et de façon coaxiale dans le conduit vertical inférieur 6a.

L'extrémité supérieure du conduit supérieur 6b est insérée éventuellement de manière amovible à l'intérieur de la cartouche 4 au travers d'un orifice 5a ménagé dans la paroi inférieure de ladite cartouche, l'étanchéité étant assurée par exemple au moyen d'un joint torique 5b.

Le conduit vertical 6a est formé par le conduit intérieur d'un manchon 6′ emmanché dans la paroi supérieure du carter 1 et servant de moyens de fixation de l'embase du boîtier 2.

Le conduit vertical inférieur 6a possède un diamètre plus grand que celui du conduit vertical supérieur 6b.

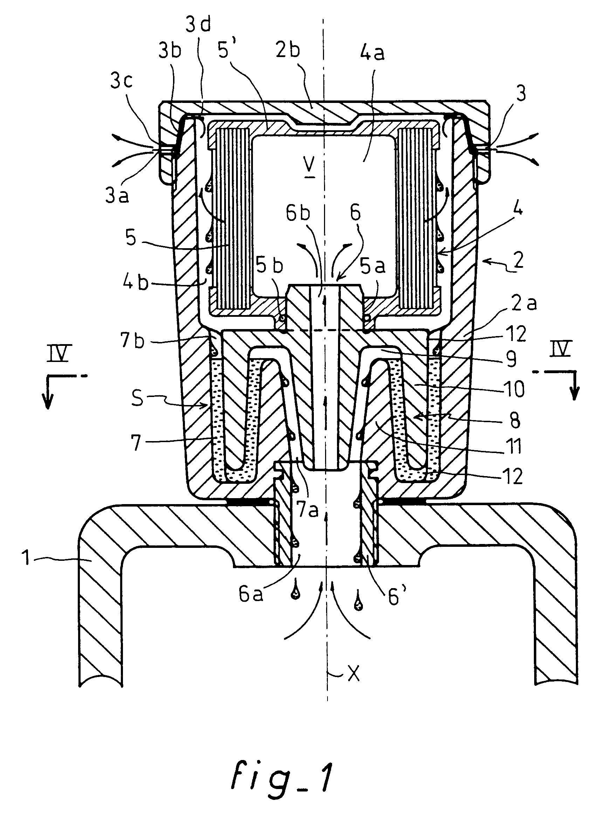

Le dispositif de l'invention, tel qu'illustré sur la figure 1, comprend également des moyens de récupération et de recyclage de l'huile.

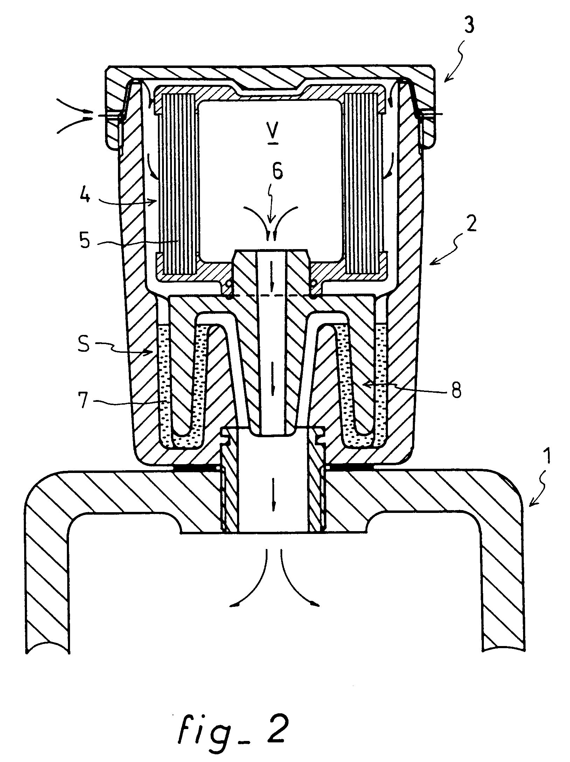

Lorsque l'huile contenue dans le carter 1 se vaporise sous l'effet de la chaleur interne, elle se mélange à l'air pour former un brouillard d'huile qui s'échappe à la partie supérieure du carter 1 par le passage vertical 6 pour remplir le volume interne V de la cartouche 2, tel que cela est illustré sur la figure 2 au moyen des flèches.

L'huile est ensuite séparée de l'air au moyen du média filtrant 5 par coalescence, c'est-à-dire par regroupement des micro-gouttelettes d'huile en gouttes de masses plus importantes sur lesquelles l'effet de la pesanteur est plus important que l'effet d'entraînement du courant gazeux.

Ce phénomène se produit essentiellement sur le média filtrant 5, de telle sorte que l'huile liquide vienne suinter et s'écouler le long de la face externe de la paroi poreuse, tandis que l'air propre est évacué dans l'atmosphère par les évents 3.

L'huile liquide est ensuite collectée par les moyens internes de récupération et de recyclage se trouvant dans la partie inférieure du boîtier 2. Comme on le voit clairement sur les dessins, la partie inférieure du boîtier 2 est hors de communication directe avec l'extérieur, les évents 3 étant disposés dans la partie supérieure de la deuxième chambre 4b.

Ces moyens de récupération et de recyclage comprennent un siphon S constitué d'au moins un conduit 7 de section verticale en N dont l'extrémité inférieure 7a débouche dans le passage vertical 6 et dont l'extrémité supérieure 7b débouche dans la partie inférieure de la deuxième chambre 4b à la base et à l'aplomb de la face externe de la paroi poreuse du média 5.

Plus précisément, l'extrémité inférieure 7a du siphon S débouche dans le conduit vertical 6 entre le conduit vertical inférieur 6a et le conduit vertical supérieur 6b. Le siphon S peut être constitué d'une pluralité de conduits de section en N régulièrement espacés autour de l'axe vertical X commun à la cartouche 4, au boîtier 2 et au passage vertical 6. Il peut également être réalisé par tout autre procédé connu.

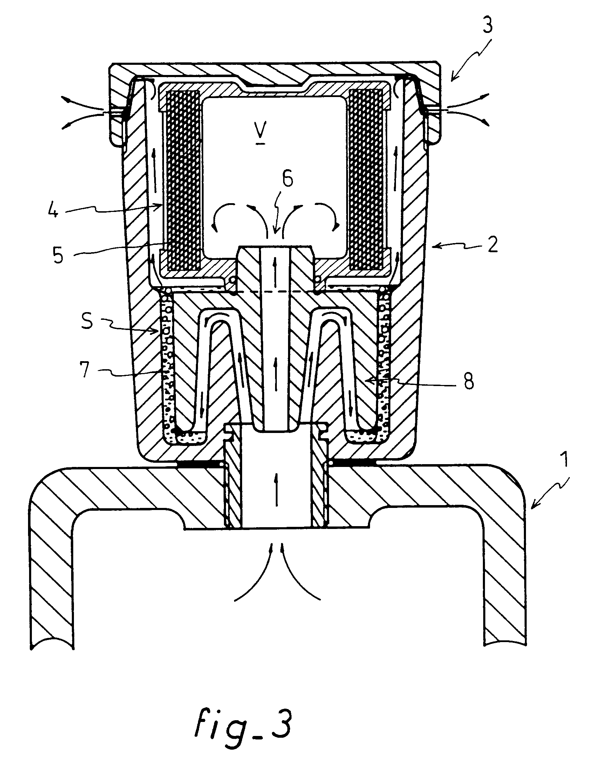

Le conduit de siphon se remplit donc de l'huile liquide provenant du média filtrant 5 par son extrémité supérieure 7b jusqu'à ce que le niveau de l'huile affleure la branche centrale du conduit de section en N et retourne ensuite au niveau de son extrémité inférieure interne 7a dans le carter 1 par le passage vertical 6. En cas de colmatage du média filtrant 5, tel qu'illustré sur la figure 3 au moyen des flèches, le volume interne V devient un volume fermé et une surpression importante peut apparaître entre l'intérieur et l'extérieur du carter 1. Le brouillard d'huile sous forte pression provoque alors l'éjection de l'huile liquide contenue dans le conduit 7 en N du siphon S.

Le conduit 7 de siphon ainsi libéré permet, en coopération avec les évents 3, une chasse d'air par mise à l'atmosphère directe du carter 1 en jouant ainsi le rôle de "soupape de sécurité".

Les paramètres intervenant dans le dimensionnement du siphon S sont critiques. Ainsi, la section, la longueur et la hauteur des branches du conduit de section en N sont-elles déterminées en fonction du carter, de l'épaisseur du film d'huile, du type de média filtrant utilisé et des conditions de service.

Si la pression interne du carter diminue, par exemple par arrêt du mouvement des organes mécaniques et refroidissement, il se produit une inversion des flux entre l'atmosphère et l'intérieur du carter 1, telle qu'illustrée sur la figure 2 au moyen des flèches. Cette situation génère un appel d'air extérieur vers l'intérieur du boîtier 2 et le volume interne V de la cartouche 4 ainsi que le carter 1 se remplissent d'air atmosphérique filtré par le média 5 et donc débarrassé d'éventuelles particules néfastes.

Il apparaît donc que dans tous les cas (figure 1 ou figure 2 le média filtrant 5 doit présenter une résistance suffisante au passage des gaz afin d'assurer une filtration efficace dans les deux sens respectivement vis-à-vis de flux de brouillards d'huile ou d'air atmosphérique chargé de particules. De préférence, le média filtrant 5 est prévu pour pouvoir arrêter des particules de 2 micromètres.

Par ailleurs, le dispositif de l'invention peut être réalisé en plusieurs pièces séparables.

Selon un mode de réalisation avantageux, on prévoit entre l'embase du boîtier 2 et la cartouche de filtration 4 située dans la partie supérieure du boîtier 2, un support de cartouche 8.

L'embase du boîtier 2 est conformée pour présenter, sur sa face supérieure, une surface de révolution en forme de N autour de l'axe vertical X. Le support de cartouche 8 présente sur sa face inférieure une surface complémentaire à celle de l'embase de boîtier, et des rainures ou canaux peuvent être ménagés dans les parois en vis-à-vis de ladite embase et du support de cartouche 8 pour constituer le siphon S.

Le support de cartouche 8 comporte un perçage vertical 6b constituant la partie supérieure du conduit vertical 6 et situé au-dessus du manchon 6′. De préférence, la face inférieure du support de cartouche 8 présente une gorge annulaire 9 ouverte vers le bas et coaxiale au perçage vertical 6b et une paroi latérale 10 légèrement tronconique et s'amincissant vers le bas.

L'embase du boîtier 2 présente une nervure annulaire 11 qui est dirigée vers l'intérieur du boîtier 2 et qui s'emboîte au moins partiellement dans la gorge annulaire 9. Des centreurs sont interposés entre les faces en vis-à-vis de l'embase du boîtier 2 et du support de cartouche 8. Ces centreurs sont formés de préférence par des surfaces en saillie 12 prévues sur la paroi latérale inférieure du boîtier 2 qui est voisine de la paroi latérale 10 du support de cartouche. Ces surfaces en saillie 12 s'étendent sensiblement à la verticale et sont régulièrement espacées autour de l'axe X du boîtier 2 et se prolongent en partie dans le fond du boîtier 2 de manière à centrer et supporter le support de cartouche 8.

Les espaces compris entre la partie inférieure du boîtier 2 et le support de cartouche 8 constituant le siphon S du dispositif de l'invention. De préférence, le support de cartouche 8 est emboîté de force dans la partie inférieure du boîtier 2, et fait partie de ce dernier, la cartouche de filtration 4 étant alors amovible comme décrit ci-dessus. La nervure annulaire 11 est espacée de la paroi du support de cartouche délimitant la gorge annulaire 9. Le siphon S débouche ainsi dans le canal vertical 6 par un orifice annulaire 13 coaxial au conduit vertical 6 situé au-dessus du manchon 6′.

## Revendications

1. Dispositif de filtration et de communication entre l'atmosphère et un réservoir à liquide notamment un carter (1) à huile, du type comprenant, d'une part, un boîtier (2) présentant une cavité interne et une embase munie de moyens de fixation sur ledit carter (1), et, d'autre part, une cartouche de filtration (4) disposée à l'intérieur dudit boîtier (2) de manière à séparer ladite cavité interne en
une première chambre (4a) qui communique avec ledit carter (1) par un passage vertical (6) ménagé dans ladite embase et ledit carter (1), et
une deuxième chambre (4b) qui entoure au moins partiellement ladite première chambre (4a) et qui communique avec l'extérieur par des évents (3) ménagés dans ledit boîtier (2), et débouchant dans la partie supérieure de ladite deuxième chambre (4b), ladite cartouche comportant un média filtrant (5) disposé sensiblement à la verticale, ledit dispositif comprenant en outre un siphon (S) interposé entre la partie inférieure de ladite deuxième chambre (4b) et ledit carter (1), et destiné à récupérer et recycler de l'huile à partir du média filtrant (5), et à mettre ledit carter (1) en communication directe avec ladite deuxième chambre en cas de surpression dans ledit carter (1), caractérisé en ce qu'il est prévu entre l'embase dudit boîtier (2) et ladite cartouche de filtration (4) logeant dans la partie supérieure dudit boîtier, un support de cartouche (8) présentant un perçage vertical (6b) formant la partie supérieure du conduit vertical (6), ledit support de cartouche (8) présentant sur sa face inférieure une gorge annulaire (9) ouverte vers le bas et une paroi latérale (10) légèrement tronconique et s'amincissant vers le bas,
en ce que l'embase du boîtier (2) présente une nervure annulaire (11) qui est dirigée vers l'intérieur dudit boîtier (2) et qui s'emboîte au moins partiellement dans ladite gorge annulaire (9), et présente des surfaces en saillie (12) destinées au centrage dudit support de cartouche (8), et en ce que ledit siphon (S) est constitué par les espaces ménagés entre ladite embase et ledit support de cartouche (8).

2. Dispositif selon la revendication 1, caractérisé en ce que ledit siphon (S) débouche dans ledit conduit vertical (6) par un orifice annulaire (13) coaxial audit conduit vertical (6).

3. Dispositif selon l'une quelconque des revendications 1 et 2, caractérisé en ce que ledit boîtier (2) comporte un couvercle (2b) et,
en ce que les évents (3) sont ménagés dans les bords latéraux dudit couvercle (2b), les orifices extérieurs (3c) desdits évents (3) se trouvant à un niveau inférieur à leurs orifices intérieurs (3d).

4. Dispositif selon l'une quelconque des revendications 1 à 3, caractérisé en ce que ledit média filtrant est du type à coalescence.

## Claims

1. Device ensuring filtration and communication between the atmosphere and a liquid reservoir, such as a crankcase (1) with oil sump, of the type comprising, on the one hand, a housing (2) having an inside cavity and a base equipped with means for securing it on said crankcase (1), and on the other hand, a filter cartridge (4) placed inside said housing (2) so as to divide said inner cavity into
a first chamber (4a) communicating with said crankcase (1) through a vertical passageway (6) provided in said base and said crankcase (1), and
a second chamber (4b) surrounding at least partly said first chamber (4a) and communicating with the outside via vents (3) provided in said housing (2) and issuing into the upper part of said second chamber (4b), said cartridge containing a filtering agent (5) placed substantially vertically, said device further comprising a siphon (S) which is interposed between the lower part of said second chamber (4b) and said crankcase (1) for recovering and recycling the oil from the filtering agent (5), and for placing the crankcase (1) in direct communication with said second chamber in case of excessive pressure in said crankcase (1), characterized in that a cartridge support (8) is provided between the base of said housing (2) and said filter cartridge (4), housed in the upper part of said housing, which cartridge support has a vertical bore (6b) forming the upper part of said vertical conduit (6), said cartridge support (8) comprising on its lower face an annular groove (9), the open part of which faces downwardly, and a slightly frusto-conical lateral wall tapered at the bottom,
in that the base of the housing (2) comprises an annular rib (11) which is directed towards the inside of said housing (2) and which fits, at least partly, in said annular groove (9), said base further comprising projecting surfaces (12) serving for centering said cartridge support (8), and
in that the siphon (S) is constituted by the spaces provided between said base and said cartridge support (8).

2. Device according to claim 1, characterized in that said siphon (S) issues into said vertical conduit (6) through an annular orifice (13) coaxial to said vertical conduit (6).

3. Device according to any one of claims 1 and 2, characterized in that said housing (2) comprises a cover (2b) and,
in that said vents (3) are made in the lateral edges of said cover (2b), the outer orifices (3c) of said vents (3) being situated at a lower level than their inner orifices (3d).

4. Device according to any one of claims 1 to 3, characterized in that said filtering agent is of the coalescent type.

## Patentansprüche

1. Filter- und Verbindungsvorrichtung zwischen der Atmosphäre und einem Flüssigkeitstank, insbesondere einem Ölbehälter (1), die ein Gehäuse (2) mit einem inneren Hohlraum und einer mit Mitteln zum Befestigen auf dem Behälter (1) versehenen Basis und eine im Inneren des Gehäuses (2) angeordnete Filterpatrone (4) aufweist, so daß der innere Hohlraum unterteilt ist in eine erste Kammer (4a), die mit dem Behälter (1) durch einen senkrechten Durchlaß (6) in Verbindung steht, der in der Basis und dem Behälter (1) angeordnet ist, und
eine zweite Kammer (4b), die die erste Kammer (4a) zumindest teilweise umgibt und die durch Lüftungsöffnungen (3) mit dem Äußeren in Verbindung steht, die im Gehäuse (2) angeordnet sind und in den oberen Teil der zweiten Kammer (4b) münden, wobei die Patrone ein im wesentlichen senkrecht angeordnetes Filtermedium (5) aufweist und die Vorrichtung ferner einen Siphon (S) aufweist, der zwischen dem unteren Teil der zweiten Kammer (4b) und dem Behälter (1) angeordnet ist und dazu dient, Öl von dem Filtermedium (5) zurückzugewinnen und zurückzuführen und bei einem Überdruck in dem Behälter (1) diesen in direkte Verbindung mit der zweiten Kammer zu setzen,
dadurch gekennzeichnet, daß der Siphon (S) zwischen der Basis des Gehäuses (2) und der im oberen Teil des Gehäuses befindlichen Filterpatrone (4) vorgesehen ist, ein Patronenhalter (8) eine senkrechte Bohrung (6b) aufweist, die den oberen Teil des senkrechten Durchlasses (6) bildet, der Patronenhalter (8) auf seiner Unterseite eine ringförmige, nach unten offene Rille (9) und eine leicht kegelstumpfförmige und sich nach unten verjüngende Seitenwand (10) aufweist,
dadurch, daß die Basis des Gehäuses (2) eine ringförmige Rippe (11) aufweist, die in das Innere des Gehäuses (2) weist und die zumindest teilweise in die ringförmige Rille (9) paßt und Flächen mit Vorsprüngen (12) aufweist, um den Patronenhalter (8) zu zentrieren, und
dadurch, daß der Siphon (S) durch die zwischen der Basis und dem Patronenhalter (8) angeordneten Zwischenräume gebildet ist.

2. Vorrichtung nach Anspruch 1,
dadurch gekennzeichnet, daß der Siphon (S) mit einer ringförmigen, zu dem senkrechten Durchlaß (6) koaxialen Öffnung (13) in den senkrechten Durchlaß (6) mündet.

3. Vorrichtung nach Anspruch 1 oder 2,
dadurch gekennzeichnet, daß das Gehäuse (2) einen Deckel (2b) aufweist und
dadurch, daß die Lüftungsöffnungen (3) in den Seitenwänden des Deckels (2b) angeordnet sind und die äußeren Mündungen (3c) der Lüftungsöffnungen (3) tiefer als deren innere Mündungen (3d) angeordnet sind.

4. Vorrichtung nach einem der Ansprüche 1 bis 3,
dadurch gekennzeichnet, daß das Filtermedium von koaleszierender Art ist.
